# EUROPEAN PATENT SPECIFICATION

(11) **EP 3 478 132 B1**
(45) Date of publication and mention of the grant of the patent: **06.12.2023**
(21) Application number: 17776926.2
(22) Date of filing: 29.06.2017
(51) Int. Cl.: F25D 3/08, A47G 19/02, F28D 20/02

(54) **DOUBLE-WALLED CROCKERY PROVIDED WITH A POUCH FILLED WITH PHASE-CHANGE MATERIAL**
DOPPELWANDIGES GESCHIRR MIT EINEM BEUTEL MIT EINEM SPEICHERMATERIAL
VAISSELLE À DOUBLE PAROI POURVUE D'UNE POCHE REMPLIE D'UN MATÉRIAU À CHANGEMENT DE PHASE

(30) Priority: 30.06.2016 BE 201605522
(43) Date of publication of application: 08.05.2019
(73) Proprietor: Probalco BVBA, 8510 Kortrijk (BE)
(72) Inventor: REDJAL, Karim, 8550 Zwevegem (BE); SPELEERS, Pol, 8790 Waregem (BE)
(74) Representative: Van den Bosch, Remy
(86) International application number: PCT/BE2017/000032
(87) International publication number: WO 2018/000055

(56) References cited:
- EP-A1- 2 829 202
- EP-A2- 1 224 897
- WO-A2-2010/012990
- DE-U1- 7 703 631
- DE-U1- 29 610 429
- FR-A1- 2 558 939
- NL-C2- 1 007 936
- US-B1- 6 213 336

## Description

### Field of the invention

The present invention relates to double-walled crockery with a wall to be heated or cooled, and in particular to double-walled crockery provided with a pouch filled with phase-change material.

### Background

The use of phase-change material as heat storage material in crockery, wherein the phase-change material is able to absorb heat in a relatively short time and to relinquish this heat again over a longer period of time, is known. An example of such an application is the use of phase-change material in a plate on which hot food is served. By making use of phase-change material the plate will cool less quickly and the food will remain warm for longer. A cavity filled with phase-change material is typically provided in the plate.

Typical phase-change materials used for this and similar applications in crockery are solid at room temperature and transpose to a liquid phase at higher temperatures at which they absorb heat.

When the phase-change material is in the liquid phase, there is the danger that particles of the phase-change material can escape through the micropores of the crockery. In the liquid phase the phase-change material can moreover move freely in the cavity under the influence of movements of the crockery, whereby the release of heat to a wall of the crockery to be heated will decrease and whereby an irregular and/or varying distribution of weight of phase-change material will occur in the crockery.

A double-walled crockery according to the preamble of claim 1 is known from the document WO 20101012990 A2.

### Summary of the invention

Embodiments of the invention have the object of providing the phase-change material in the crockery in a manner such that a better exchange of heat is obtained between a wall of the crockery to be heated or cooled and the phase-change material when compared to known applications of phase-change material as heat storage material in crockery.

The invention is defined in the independent claims 1 and 2 and relates to double-walled crockery comprising a first wall to respectively be heated or cooled, and a second wall, wherein between the first wall and the second wall is located a space in which a pouch filled with a phase-change material is accommodated. The pouch is arranged against the first wall of the crockery and a thermally insulating layer is present between the pouch and the second wall of the crockery. A high vacuum prevails in the filled pouch. When, as in claim 1, the first wall is to be heated, the phase-change material has a melting temperature of between 40°C and 300°C. Alternatively, when, as in claim 2, the first wall is to be cooled the phase-change material has a melting temperature of between 0°C and 14°C.

By providing the phase-change material in a filled pouch the freedom of movement of the phase-change material in the crockery is limited by the pouch. Because the pouch is arranged against the first wall of the crockery, a better heat exchange between the pouch and the first wall to be heated or cooled is obtained when compared to known applications of phase-change material in crockery wherein a thermally insulating layer, for instance an air layer, is present between the phase-change material and the first wall to be heated or cooled. The pouch is arranged against the first wall of the crockery, while a thermally insulating layer is present between the pouch and the second wall of the crockery. This thermally insulating layer ensures that the amount of heat leaving the crockery via a path other than via the first wall is limited. This has the advantage that an efficient and targeted heat exchange can take place between the phase-change material and the first wall of the crockery and that the second wall of the crockery does not heat up, or only does so to limited extent.

In a preferred embodiment the pouch is elastic and flexible to an extent such that the pouch can also stretch when the phase-change material expands during transition from the one phase to the other, and such that the pouch becomes taut again when the phase-change material contracts during a reverse phase transition. The flexibility of the pouch further ensures that it can be arranged fittingly against walls of different shapes to be heated or cooled without air spaces forming between the pouch and the wall.

In a possible embodiment a first wall part of the pouch arranged against the first wall is optionally elastic, while a second wall part of the pouch facing toward the second wall is elastically flexible. In another possible embodiment this second wall part of the pouch facing toward the second wall of the crockery is not elastic, but has a surface area such that an expansion of the phase-change material is possible.

In an embodiment the double-walled crockery is for instance a plate and the above stated measures ensure that the first wall of the plate on which food is located is kept warm or heated by means of the pouch and that the second wall, for instance the bottom wall of the plate, remains cool so that it is possible to take hold of the plate by the bottom wall without the danger of burn injuries. Although the example of a plate is given here, the described measures can be applied to diverse types of crockery with at least one wall for heating or cooling. Examples thereof are: oven dishes, cups, dessert plates, soup bowls, dessert coupes, pizza plates, spoons and so on.

In a preferred embodiment of the double-walled crockery the pouch is filled with phase-change material not accommodated in capsules.

The use of phase-change material accommodated in micro- or macro-capsules is known. A higher heat capacity can however be obtained by making use of phase-change material not accommodated in capsules when compared to the same amount of material accommodated in capsules. This is because air is often present between the micro- or macro-capsules, and this results in a thermally insulating effect. Phase-change material not accommodated in capsules can moreover be placed in simple and efficient manner in a pouch of appropriate form, whereby a more efficient contact surface can be obtained for heat exchange between the phase-change material in the pouch and the wall of the crockery to be heated, when compared to crockery provided with phase-change material accommodated in capsules.

In an exemplary embodiment of the double-walled crockery the thermally insulating layer is an air layer. Air is a good thermal insulator and the insulating air layer will ensure that the amount of heat leaving the crockery via a path other than via the first wall to be heated is limited. This has the advantage that an efficient and targeted heat exchange can take place between the phase-change material and the first wall of the crockery and that the second wall of the crockery does not heat up in undesirable manner.

The pouch can be held in different ways in the position arranged against the first wall. The advantage of holding the pouch in position is that movements of the crockery will have substantially no effect on the pouch and the position thereof against the first wall. An efficient and targeted heat exchange between the pouch and the first wall of the crockery is thus possible in all conditions. In an exemplary embodiment of the double-walled crockery the pouch is glued against the first wall of the crockery. Glueing the pouch against the first wall of the crockery results in a glue layer between the pouch and the first wall. The resulting glue layer typically has a thermally insulating effect, though it typically insulates considerably less than air, and this glue layer can be relatively thin. The glue layer will therefore typically only have a delaying effect on the heat exchange between the pouch and the first wall of the crockery, while an insulating air layer between the pouch and the first wall of the crockery would seriously interfere with this heat exchange.

In an exemplary embodiment of the double-walled crockery the thermally insulating layer comprises an elastic pressing material configured to press the pouch against the first wall of the crockery. As described above, the thermally insulating layer between the pouch and the second wall of the crockery has in the first place an insulating function which contributes toward a targeted and efficient heat exchange between the pouch and the first wall of the crockery. The elastic pressing material in the thermally insulating layer moreover ensures that the pouch is held in position against the first wall of the crockery. The elastic pressing material can thus be an alternative to glueing the pouch against the first wall. Both measures can however also be combined with each other. In addition, other attaching and clamping techniques are also possible which ensure that the pouch is attached or pressed against the first wall of the crockery.

The elastic pressing material preferably has a heat conduction coefficient of less than 0.9 W/(m.K), and preferably of less than 0.5 W/(m.K). Examples of elastic pressing materials which can be used are wood, cork, polyethylene etc. It will however be apparent to the skilled person that other common elastic materials can also be used for the above described measure. The elastic pressing material preferably has a heat conduction coefficient which is lower than the heat conduction coefficient of the material of which the crockery consists, such as for instance chinaware, earthenware, metal or glass. The elastic pressing material is for instance a foam. The foam preferably has a heat conduction coefficient of less than 0.5 W/(m.K), more preferably. of less than 0.3 W/(m.K) and most preferably of less than 1.5 W/(m.K). Foam is light and the use of foam as elastic pressing material will have a negligible effect on the overall weight of the crockery.

In the double-walled crockery a high vacuum prevails in the filled pouch, wherein a pressure of between 1 × 10⁻¹ and 1 × 10⁻⁷ Pa prevails in the pouch.

Because a high vacuum prevails in the pouch, insulating air is prevented from being able to lodge between the phase-change material and the walls of the pouch, or between different parts of the phase-change material. The phase-change material in the vacuum pouch is moreover protected from possible contaminants, possible degradation of the phase-change material, and igniting of the phase-change material is prevented by the high vacuum in the pouch.

In an exemplary embodiment of the double-walled crockery the pouch is arranged against the first wall of the crockery such that the layer of phase-change material has a thickness, as seen in a direction transversely of the first wall of the crockery, of between 2 mm and 10 mm. The space between the first wall and the second wall of the crockery is often limited. It is therefore advantageous, with the smallest possible quantity of phase-change material, to obtain the most efficient possible heat exchange which meets the needs of a specific type of crockery. A layer of a suitable thickness can be selected depending on the type of crockery and on the desired heating or cooling of the first wall.

In a preferred embodiment of the double-walled crockery the pouch filled with phase-change material releases per square centimetre of surface area a heat energy of between 50 joule and 200 joule, preferably of between 100 joule and 180 joule.

In an exemplary embodiment of the double-walled crockery the first wall of the crockery is substantially flat and the pouch is arranged against a central part of the first wall such that a border part of the first wall is left clear. When the crockery is for instance a plate with a substantially flat, circular first wall, it is advantageous to arrange the pouch against the central part of the first wall since more food will come to lie in the central part of the plate than at the border part of the plate. By leaving a border part of the first wall clear the pouch has the opportunity to stretch along the first wall from the central part to the border part when the phase-change material in the pouch melts. This avoids pressure being built up in the space between the first wall and the second wall of the plate. It is moreover more advantageous for the heat exchange with the first wall that the pouch stretches along the first wall instead of away from the first wall.

In another exemplary embodiment of the double-walled crockery the first wall of the crockery is bowl-shaped and the pouch comprises a part formed in bowl shape which is configured to be arranged against the first bowl-shaped wall. Because the pouch has a part formed in bowl shape, the pouch can be arranged in efficient manner against the first wall of the crockery. In the case of a coffee or tea cup the pouch with the part formed in bowl shape can for instance be arranged in advantageous manner simultaneously against a bottom part of the first wall and against a standing side part of the first wall. It will be apparent to the skilled person that the same principle can be applied for any random shape of the first wall, wherein the pouch can have a wall part with a corresponding shape in order to guarantee good contact between the pouch and the first wall.

In a preferred embodiment the contact surface between the first wall and the pouch is larger than a third of the total outer surface of the pouch. This guarantees that the most efficient possible heat exchange can take place between the pouch and the first wall, and the amount of heat released by the pouch in directions other than in the direction of the first wall is limited.

In an exemplary embodiment of the double-walled crockery the first wall is a wall to be heated and the phase-change material has a melting temperature of between 40°C and 65°C, preferably between 50°C and 60°C. Phase-change material with such a melting temperature is highly suitable for use in crockery intended for hot foods. The foods will thus be kept at temperature without being cooked or fried any further. Typical phase-change materials used are paraffin, salt hydrates and/or eutectic materials.

In an alternative exemplary embodiment of the double-walled crockery the first wall is a wall to be heated and the phase-change material has a melting temperature of between 65°C and 95°C, preferably of between 70°C and 80°C. Phase-change material with such a melting temperature is highly suitable for use in crockery intended for hot beverages such as coffee, tea, drinking chocolate and so on.

When in the double-walled crockery the first wall is a wall to be cooled the phase-change material has a melting temperature of between 0°C and 14°C, preferably between 4°C and 8°C. Phase-change material with such a melting temperature is highly suitable for use in crockery intended for cold dishes, such as ice creams, or for cold beverages.

In a preferred embodiment of the double-walled crockery the pouch comprises a first and a second film, wherein the phase-change material is situated between the first and second films. The films of the pouch can comprise different materials just as long as the pouch has the necessary flexibility and/or dimensions and the films can keep the phase-change material enclosed. The freedom of movement of the phase-change material in the crockery is thus limited by the pouch. At least one of the first and second film is preferably elastically flexible to an extent such that the pouch can also stretch when the phase-change material expands at the transition from the solid phase to the liquid phase, and such that the pouch becomes taut again when the phase-change material contracts during a reverse phase change. In another possible embodiment the second film of the pouch facing toward the second wall of the crockery is not elastic, but has a surface area such that an expansion of the phase-change material is possible. It will be apparent to the skilled person that different materials meet the above stated requirements and that the films can for instance be made of different types of plastic and/or metal, such as aluminium. Films moreover have the advantage that they can be laminated in advantageous manner, whereby different material properties can be combined in one film. A pouch can for instance thus be formed in advantageous manner which consists of a welding layer, for instance of polypropylene, laminated with an aluminium foil. The aluminium foil ensures that the pouch is substantially impermeable to molecules.

In a preferred embodiment of the double-walled crockery the first film and second film of the pouch are at least 40 µm thick, preferably between 50 µm and 150 µm thick. Films of such thickness ensure that the pouch provides a high degree of protection and strength, while the pouch remains flexible.

In a further preferred embodiment of the double-walled crockery the first film and second film of the pouch comprise a welding layer and a barrier layer, wherein the welding layer of the first film is welded to the welding layer of the second film. The barrier layer is selected such that it does not allow passage of molecules of the phase-change material, particularly at higher temperatures at which the phase-change material becomes liquid. The welding layer is selected such that it is weldable in simple manner, whereby the first film and second film can be welded to each other at a peripheral part of the first and second film. The welding layer preferably comprises polypropylene and the barrier layer comprises polyamide. The first film and/or the second film preferably comprises a layer manufactured from aluminium. A film can for instance thus be obtained in advantageous manner which consists of a welding layer, for instance of polypropylene, laminated with an aluminium foil as barrier layer. The aluminium foil ensures that the pouch is substantially impermeable to molecules.

The crockery is preferably manufactured from ceramic material, for instance chinaware, earthenware, glass and so on. In an embodiment the double-walled crockery comprises a first part of ceramic material and a second part of ceramic material, wherein the first part comprises the first wall and the second part comprises the second wall. The first part is attached against the second part in order to form the double-walled crockery. The first and second parts can for instance be any of the following: an upper part of a plate and a lower part of a plate; an inner part of a cup and an outer part of a cup; an upper part of a spoon and a lower part of a spoon, and so on. In other embodiments the first and second walls form part of one integrally formed double-walled article.

In an advantageous embodiment the crockery comprises at least two parts of ceramic material which are attached to each other in sealed manner, for instance by an attaching means, in order to bound said space in which the pouch is accommodated.

### Brief description of the figures

The above stated and other advantageous properties and objectives of the invention will become more apparent, and the invention better understood, on the basis of the following detailed description when read in combination with the accompanying drawings, in which:
Figure 1A shows a cross-section of an exemplary embodiment of an article of crockery, in particular a plate, provided with a pouch filled with phase-change material according to the invention;
Figure 1B shows a simplified cross-section of an exemplary embodiment of an article of crockery, in particular a plate, provided with a pouch filled with phase-change material according to the invention;
Figure 2 shows a simplified cross-section of an alternative exemplary embodiment of an article of crockery provided with a pouch filled with phase-change material according to the invention;
Figure 3 shows a simplified cross-section of an alternative exemplary embodiment of an article of crockery provided with a pouch filled with phase-change material according to the invention;
Figure 4 shows a simplified cross-section of an alternative exemplary embodiment of an article of crockery provided with a pouch filled with phase-change material according to the invention, wherein the first wall of the crockery is substantially flat and the pouch is arranged against a central part of the first wall;
Figure 5 shows a cross-section of an alternative exemplary embodiment of an article of crockery provided with a pouch filled with phase-change material according to the invention, wherein the first wall of the crockery is bowl-shaped and the pouch comprises a part formed in bowl shape which is configured to be arranged against the first bowl-shaped wall; and
Figures 6A and 6B show simplified cross-sections of embodiments of double-walled crockery, wherein the crockery comprises a first part and a second part of ceramic material.

### Detailed embodiments

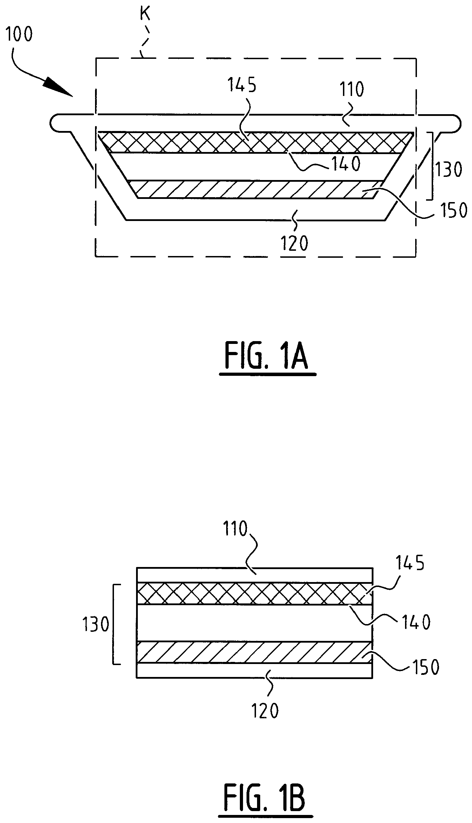

A first embodiment of an article of double-walled crockery provided with a pouch filled with phase-change material is illustrated in Figure 1A. This is a double-walled article of crockery 100, more specifically a plate 100, comprising a first wall 110 to be heated or cooled and a second wall 120, wherein between first wall 110 and second wall 120 a space 130 is present in which a pouch 140 filled with a phase-change material 145 is accommodated. Pouch 140 is arranged against first wall 110 of the crockery and a thermally insulating layer 150 is present between pouch 140 and second wall 120 of the crockery. Figure 1B shows a simplified view of the article of crockery 100 of Figure 1A, and Figure 1B shows in particular the part of crockery 100 indicated with the broken line border K in Figure 1A. Figure 1B shows the same elements as Figure 1A, but now without these being linked to a specific type of crockery. It will be apparent to the skilled person that the elements and measures shown in Figure 1B can be applied in different types and shapes of crockery, such as oven dishes, cups, dessert plates, soup bowls, dessert coupes, pizza plates, spoons and so on. In order to keep the figures as clear as possible, measures which are universally applicable in diverse types of crockery will be illustrated on the basis of figures similar to Figure 1B. When determined measures apply only to specific types of crockery, this will be stated in the text.

Figures 1A and 1B show a first wall 110 and second wall 120 of the article of crockery 100, wherein walls 110, 120 are substantially parallel to each other. It will however be apparent to the skilled person that the principles of the invention can likewise be applied when walls 110, 120 are oriented in other manner relative to each other. Walls 110, 120 are shown for the sake of simplicity as flat walls. The skilled person will however appreciate that the principles of the invention can likewise be applied when walls 110, 120 have a different shape.

The phase-change material 145 used in pouch 140 can be any known phase-change material and, depending on the type of crockery, a specific phase-change material may be preferred to another phase-change material. A phase-change material may thus be selected for instance on the basis of the melting point thereof, since a higher or lower melting point can be advantageous for optimal heating or cooling of liquids or foods. Organic phase-change materials based on paraffins are particularly suitable for use in a pouch 140 filled with phase-change material 145 for use in double-walled crockery.

By providing phase-change material 145 in a pouch 140 the freedom of movement of phase-change material 145 in crockery 100 is limited by the pouch. Pouch 140 is embodied for instance in an elastically flexible material such that pouch 140 can also stretch when phase-change material 145 expands during transition from the one phase to the other, and such that pouch 140 becomes taut again when phase-change material 145 contracts during a reverse phase transition. Because pouch 140 is arranged against first wall 110, a better heat exchange is obtained between pouch 140 and the wall 110 to be heated or cooled when compared to known applications of phase-change material in crockery wherein an insulating layer, such as for instance an air layer, is present between the phase-change material and the wall to be heated or cooled. Pouch 140 can moreover be positioned in advantageous manner against the first wall of the crockery, whereby a very targeted heat exchange can take place. In addition, a thermally insulating layer 150 is situated between pouch 140 and second wall 120 of the crockery. This thermally insulating layer 150 ensures that the amount of heat leaving the crockery via a path other than via first wall 110 is limited. This has the advantage that an efficient and targeted heat exchange can take place between the phase-change material and the first wall of the crockery and that second wall 120 of the crockery does not heat up unnecessarily, or only does so to limited extent. A first wall part of the pouch arranged against first wall 110 can be optionally elastic, while a second wall part of pouch 140 facing toward second wall 140 is preferably elastic and flexible. In another possible embodiment this second wall part of pouch 140 facing toward second wall 120 of the crockery is not elastic, but has a surface area such that an expansion of phase-change material 145 is possible. Thermally insulating layer 150 is shown in Figures 1A and 1B as a layer situated against second wall 120. Thermally insulating layer 150 can however also be situated closer to or against pouch 140. In an embodiment the whole space 130 between pouch 140 and second wall 120 is filled with a thermally insulating material, for instance air. This material, for instance air, then forms the thermally insulating layer. In the shown embodiment of Figure 1A the double-walled crockery is for instance a plate 100, and the above stated measures ensure that first wall 110 of the plate, wherein the food is on the upper side of first wall 110, is kept warm or heated by means of pouch 140 located against the underside of first wall 110, while the second wall, for instance the bottom wall of the plate, remains cool so that it is possible to take hold of the plate by the bottom wall without the danger of burn injuries.

In a preferred embodiment of the double-walled crockery the pouch 140 is filled with phase-change material 145 not accommodated in capsules, whereby a more efficient contact surface can be obtained for heat exchange between phase-change material 145 in pouch 140 and the wall 110 of the crockery to be heated, when compared to crockery provided with phase-change material accommodated in capsules.

In the double-walled crockery a high vacuum prevails in pouch 140 filled with phase-change material 145. A pressure of between 1 × 10⁻¹ and 1 × 10⁻⁷ Pa then prevails in pouch 140. Because a high vacuum prevails in pouch 140, insulating air is prevented from being able to lodge between phase-change material 145 and the walls of pouch 140, or between different parts of phase-change material 145. Phase-change material 145 in vacuum pouch 140 is moreover protected from possible contaminants, possible degradation of the phase-change material, and igniting of phase-change material 145 is prevented by the high vacuum in the pouch.

In an exemplary embodiment of the double-walled crockery the pouch 140 is arranged against first wall 110 of the crockery such that the layer of phase-change material 145 has a thickness, as seen in a direction transversely of first wall 110 of crockery 100, of between 2 mm and 10 mm. The space 130 between first wall 110 and second wall 120 of the crockery is often limited. It is therefore advantageous, with the smallest possible quantity of phase-change material, to obtain the most efficient possible heat exchange which meets the requirements of a specific type of crockery. A layer of a suitable thickness can be selected depending on the type of crockery and on the desired heating or cooling of first wall 110.

In a preferred embodiment of the double-walled crockery the pouch 140 filled with phase-change material 145 releases per square centimetre of surface area a heat energy of between 50 joule and 200 joule, preferably of between 100 joule and 180 joule.

In a preferred embodiment the contact surface between first wall 110 and pouch 140 is larger than a third of the total outer surface of pouch 140. The contact surface between the first wall and the pouch is typically larger than 0.4 times the total outer surface of pouch 140, and for instance about half the total outer surface. This guarantees that the most efficient possible heat exchange can take place between pouch 140 and first wall 110, and the amount of heat released by pouch 140 in directions other than in the direction of first wall 110 is limited. The contact surface between first wall 110 and pouch 140 can be favourably influenced by providing a pouch 140 filled with phase-change material 145 of suitable thickness and/or by advantageous shaping of a part of pouch 140.

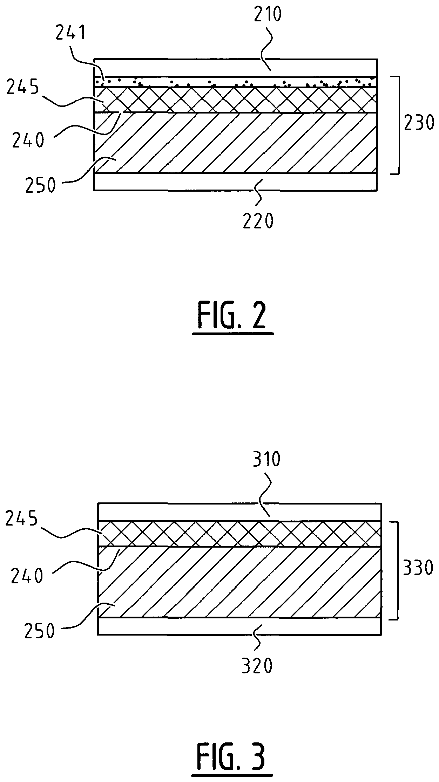

Figure 2 shows an exemplary embodiment of the double-walled crockery wherein pouch 240 is glued against first wall 210 of the crockery. Pouch 240 can be held in different alternative ways in the position arranged against first wall 210. The advantage of holding pouch 240 in position is that movements of the crockery will have substantially no influence on pouch 240 and the position thereof against first wall 210. An efficient and targeted heat exchange between pouch 240 and first wall 210 of the crockery is thus possible in all conditions. Glueing pouch 240 against the first wall of the crockery results in a glue layer 241 between pouch 240 and first wall 210. The resulting glue layer 241 typically has a thermally insulating effect, though it typically insulates considerably less than air, and this glue layer 241 can be relatively thin.

In the embodiment of Figure 2 thermally insulating layer 250 is an air layer present in space 230 between pouch 240 and first wall 210 of the crockery. As indicated above, air is a good thermal insulator and thermally insulating air layer 150 will ensure that the amount of heat leaving the crockery via a path other than via the first wall 210 to be heated is limited. This has the advantage that an efficient and targeted heat exchange can take place between phase-change material 245 and first wall 210 of the crockery and that second wall 220 of the crockery does not heat up in undesirable manner.

Figure 3 shows in simplified manner a preferred embodiment of the double-walled crockery wherein thermally insulating layer 350 comprises an elastic pressing material 350 configured to press pouch 340 against first wall 310 of the crockery. As described above, thermally insulating layer 350 between pouch 340 and second wall 320 of the crockery has in the first place an insulating function which contributes toward a targeted and efficient heat exchange between pouch 340 and first wall 310 of the crockery. The elastic pressing material 350 in thermally insulating layer 350 moreover ensures that pouch 340 is held in position against first wall 310 of the crockery. Elastic pressing material 350 can thus be an alternative to glueing pouch 340 against the first wall as shown in Figure 2. Both measures can however also be combined with each other in advantageous manner. Elastic pressing material 350 preferably has a heat conduction coefficient of less than 0.9 W/(m.K), and more preferably of less than 0.5 W/(m.K). Examples of elastic pressing materials 350 which can be used are wood, cork, polyethylene etc. It will however be apparent to the skilled person that other common elastic materials can also be used for the above described measure. The elastic pressing material preferably has a heat conduction coefficient which is lower than the heat conduction coefficient of the material of which the crockery consists, such as for instance chinaware, earthenware, metal or glass. Elastic pressing material 350 can also be a foam. The foam used preferably has a heat conduction coefficient of less than 0.5 W/(m.K), more preferably of less than 0.3 W/(m.K) and most preferably of less than 1.5 W/(m.K). Foam is light and the use of foam as elastic pressing material 350 will have a negligible effect on the overall weight of the crockery. It is hereby possible to avoid the crockery becoming too heavy, whereby it would no longer be easy to handle. Typical foams which can be used as elastic pressing material 350 are for instance PU foam, EVA foam or polystyrene foam.

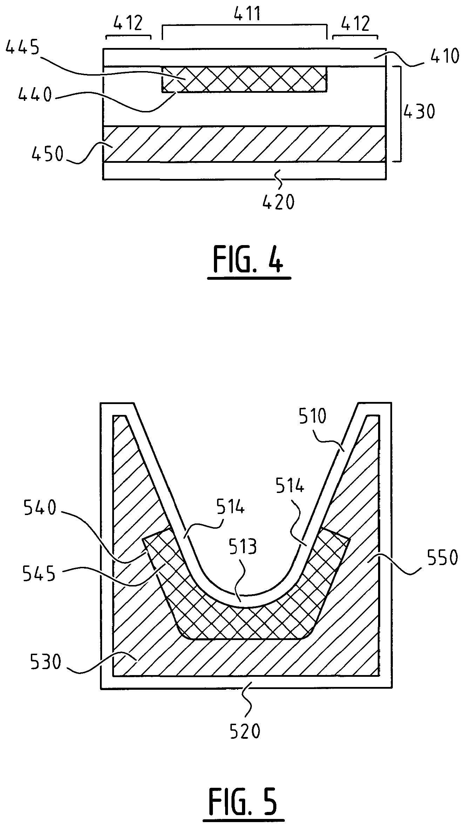

Figure 4 shows an embodiment of the double-walled crockery wherein first wall 410 of the crockery is substantially flat and pouch 440 is arranged against a central part 411 of first wall 410 such that a border part 412 of first wall 410 is left clear. For the sake of clarity the reference numerals 411, 412 in Figure 4 are placed at the upper side of first wall 410, although it will be apparent that pouch 440, central part 411 against which pouch 440 is arranged and the free border part 412 are situated against the underside of first wall 410. When the article of crockery is for instance a plate with a substantially flat, circular first wall 410, it is advantageous to arrange pouch 440 against central part 411 of first wall 410 since more food will come to lie in the central part of the plate than at the border part of the plate, and it is therefore more useful to have the heat exchange take place at the centre of first wall 410. By leaving a border part 412 of first wall 410 clear the pouch 440 has the opportunity to stretch along first wall 410 from central part 411 to border part 412 when phase-change material 440 in the pouch melts. This avoids pressure being built up in space 430 between the first wall and the second wall of the plate. It is moreover more advantageous for the heat exchange with first wall 410 that pouch 440 stretches along first wall 410 instead of away from first wall 410.

In an exemplary embodiment of the double-walled crockery the first wall is a wall to be heated and the phase-change material has a melting temperature of between 40°C and 65°C, preferably between 50°C and 60°C. Phase-change material with such a melting temperature is highly suitable for use in crockery intended for hot foods. The foods will thus be kept at temperature without being cooked or fried any further. For other types of crockery wherein higher temperatures are desirable, such as for instance oven dishes, phase-change materials can be used with a melting point lying between 120°C and 250°C. It will be apparent to the skilled person that the principles and measures according to embodiments of the invention can be applied for different types of phase-change material, wherein the melting temperature of the respective phase-change materials can vary from 40°C to 300°C.

Figure 5 illustrates an embodiment of the double-walled crockery wherein first wall 510 of the crockery is bowl-shaped 531 and wherein pouch 540 comprises a part formed in bowl shape which is configured to be arranged against first bowl-shaped wall 510, 513. Because pouch 540 has a part formed in bowl shape, pouch 540 can be arranged in efficient manner against first wall 510, 513 of the crockery. In the case of a coffee or tea cup the pouch 540 with the part formed in bowl shape can for instance be arranged in advantageous manner simultaneously against a bottom part 513 of first wall 510 and against a standing side part 514 of the first wall. It will be apparent to the skilled person that the same principle can be applied for any random shape of first wall 510, wherein pouch 540 can have a wall part with a corresponding shape in order to guarantee good contact between pouch 540 and first wall 510.

In a preferred embodiment the contact surface between first wall 510 and pouch 540 is larger than a third of the total outer surface of pouch 540. The contact surface between first wall 510 and pouch 540 can be favourably influenced by providing a pouch 540 filled with phase-change material 545 of suitable thickness and/or advantageously shaping a part of pouch 540.

In an exemplary embodiment of the double-walled crockery the first wall 510 is a wall to be heated and phase-change material 545 has a melting temperature of between 65°C and 95°C, preferably of between 70°C and 80°C. Phase-change material 545 with such a melting temperature is highly suitable for use in crockery intended for hot beverages such as coffee, tea, drinking chocolate and so on.

When in the double-walled crockery the first wall 510 is a wall to be cooled and phase-change material 545 has a melting temperature of between 0°C and 14°C, preferably between 4°C and 8°C. Phase-change material 545 with such a melting temperature is highly suitable for use in crockery intended for cold dishes, such as ice creams, or for cold beverages.

In a preferred embodiment of the double-walled crockery the pouch 140 comprises a first and a second film, wherein phase-change material 145 is situated between the first and second films. The films of the pouch can comprise different materials just as long as the pouch has the necessary flexibility, elasticity and/or dimensions and the films can keep the phase-change material enclosed. The freedom of movement of the phase-change material in the crockery is thus limited by the pouch. It will be apparent to the skilled person that different materials meet the above stated requirements and that the films can for instance be made of different types of plastic or aluminium. Films moreover have the advantage that they can be laminated in advantageous manner, whereby different material properties can be combined in one film. The films can have one or more of the above described properties.

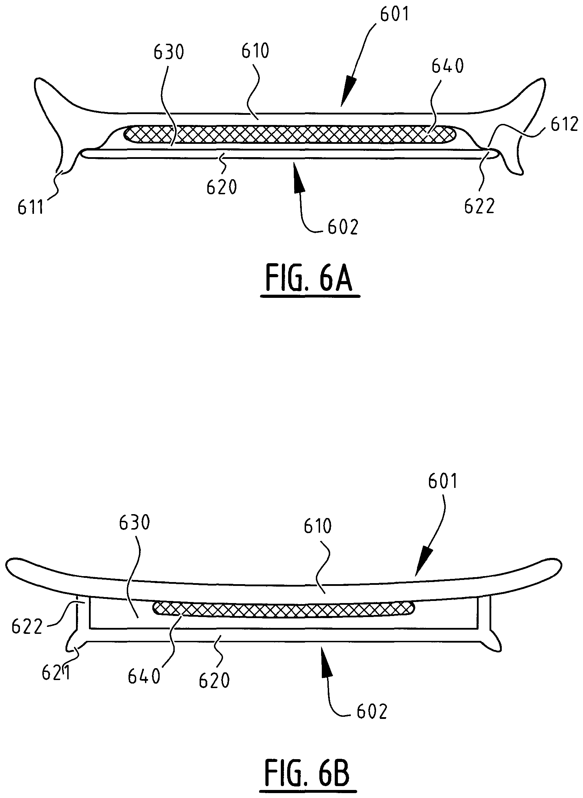

Figure 6A illustrates a plate with an upper first part 601 substantially with the shape of a "normal" plate, against which a substantially flat round second lower part 602 is attached. First part 601 comprises first wall 610 and second part 602 comprises second wall 620. Pouch 640 is arranged, preferably substantially centrally, against an underside of first wall 610 of first part 601. The upper first part 601 is provided on the underside thereof with a round support edge 611 which makes contact with the surface on which the plate is placed. Provided on the inner side of support edge 611 is a support flange 612 against which a peripheral edge 622 of second part 602 is attached, for instance by glueing. When second part 602 is attached against first part 601, a space 630 in which a thermally insulating layer, for instance an air layer, is present lies between pouch 640 and second wall 620 of second part 602.

Figure 6B illustrates a similar article of crockery as that of Figure 6A, with the difference that first upper part 601 in Figure 6B has a substantially flat bottom side and is attached to an upper edge 622 of a second lower part 602. Second part 602 comprises second wall 620 and has a bottom edge 621 on which the plate is supported.

In other embodiments the first and the second wall can form part of one integrally formed double-walled piece which is finished with further parts so as to form the article of crockery. Note that the skilled person will appreciate that the variants shown in Figures 1A and 5 are typically also manufactured from two or more parts which are attached to each other so as to form a closed article of crockery in which the pouch is accommodated.

The skilled person will appreciate that the invention is not limited to the above described embodiments, and that many modifications and variants are possible within the scope of the invention, which is defined solely by the following claims.

## Claims

1. Double-walled crockery (100) comprising a first wall (110) to be heated, and a second wall (120), wherein between the first wall and the second wall is located a space (130) in which a pouch (140) filled with a phase-change material is accommodated, wherein the pouch (140) is arranged against the first wall (110) of the crockery (100) and wherein a thermally insulating layer (150) is present between the pouch (140) and the second wall (120) of the crockery (100 **characterised in that**
the phase-change material has a melting temperature of between 40°C and 300°C and wherein a high vacuum prevails in the filled pouch (140).

2. Double-walled crockery (100) comprising a first wall (110) to be cooled, and a second wall (120), wherein between the first wall and the second wall is located a space (130) in which a pouch (140) filled with a phase-change material is accommodated, wherein the pouch (140) is arranged against the first wall (110) of the crockery (100) and wherein a thermally insulating layer (150) is present between the pouch (140) and the second wall (120) of the crockery (100), **characterised in that**
the phase-change material has a melting temperature of between 0°C and 14°C and wherein a high vacuum prevails in the filled pouch (140).

3. Crockery (100) as claimed in claim 1 or 2, wherein the pouch (140) is filled with phase-change material not accommodated in capsules.

4. Crockery (100) as claimed in any one of the foregoing claims, wherein the pouch (140) is glued against the first wall (110) of the crockery (100).

5. Crockery (100) as claimed in any of the foregoing claims, wherein the thermally insulating layer (150) is an air layer.

6. Crockery (100) as claimed in any of the foregoing claims, wherein the first (110) and second walls (120) are manufactured from ceramic material; and/or
wherein the crockery (100) comprises at least a first part of ceramic material and a second part of ceramic material, wherein the first part comprises the first wall (110) and the second part comprises the second wall (120), and wherein the first part is attached against the second part such that they bound a closed space in which the pouch is accommodated.

7. Crockery (100) as claimed in the foregoing claim, wherein the first part and the second part are any of the following: an upper part of a plate and a lower part of a plate; an inner part of a cup and an outer part of a cup; an upper part of a spoon and a lower part of a spoon.

8. Crockery (100) as claimed in any of the foregoing claims, wherein the thermally insulating layer (150) comprises an elastic pressing material configured to press the pouch (140) against the first wall (110) of the crockery (100); and/or
wherein the elastic pressing material has a heat conduction coefficient of less than 0.9 W/(m.K), and preferably of less than 0.5 W/(m.K); and/or
wherein the elastic pressing material is a foam.

9. Crockery (100) as claimed in any of the foregoing claims, wherein the pouch (140) is arranged against the first wall (110) of the crockery such that a layer of the phase-change material has a thickness, in a direction transversely of the first wall (110) of the crockery (100), of between 2 mm and 10 mm.

10. Crockery (100) as claimed in any of the foregoing claims, wherein the first wall (110) of the crockery (100) is substantially flat, and wherein the pouch (140) is arranged against a central part of the first wall (110) such that a border part of the first wall (110) is left clear.

11. Crockery (100) as claimed in any of the foregoing claims, wherein the first wall (110) is bowl-shaped and wherein the pouch (140) comprises a part formed in bowl shape which is configured to be arranged against the first (110) bowl-shaped wall.

12. Crockery (110) as claimed in any of the foregoing claims, wherein the pouch (140) comprises a first and a second film, wherein the phase-change material is situated between the first and second films; and
wherein the first film and second film of the pouch are at least 40 µm thick, and preferably between 50 µm and 150 µm thick.

13. Crockery (110) as claimed in claim 12, wherein the first film and second film of the pouch (140) comprise a welding layer and a barrier layer, wherein the welding layer of the first film is welded to the welding layer of the second film and
wherein the welding layer comprises polypropylene and the barrier layer comprises polyamide.

14. Crockery (100) as claimed in any of the claims 12-13, wherein the first film and/or the second film comprise a layer manufactured from aluminium.

## Patentansprüche

1. Doppelwandiges Geschirr (100) mit einer ersten zu erwärmenden Wand (110) und einer zweiten Wand (120), wobei sich zwischen der ersten Wand und der zweiten Wand ein Raum (130) befindet, in dem ein mit einem Phasenwechselmaterial gefüllter Beutel (140) aufgenommen ist, wobei der Beutel (140) an der ersten Wand (110) des Geschirrs (100) angeordnet ist, und wobei sich zwischen dem Beutel (140) und der zweiten Wand (120) des Geschirrs (100) eine thermisch isolierende Schicht (150) befindet,
**dadurch gekennzeichnet, dass**
das Phasenwechselmaterial eine Schmelztemperatur zwischen 40°C und 300°C aufweist, und wobei in dem gefüllten Beutel (140) Hochvakuum herrscht.

2. Doppelwandiges Geschirr (100) mit einer ersten zu kühlenden Wand (110) und einer zweiten Wand (120), wobei sich zwischen der ersten Wand und der zweiten Wand ein Raum (130) befindet, in dem ein mit einem Phasenwechselmaterial gefüllter Beutel (140) aufgenommen ist, wobei der Beutel (140) an der ersten Wand (110) des Geschirrs (100) angeordnet ist, und wobei sich zwischen dem Beutel (140) und der zweiten Wand (120) des Geschirrs (100) eine thermisch isolierende Schicht (150) befindet,
**dadurch gekennzeichnet, dass**
das Phasenwechselmaterial eine Schmelztemperatur zwischen 0°C und 14°C aufweist, und wobei in dem gefüllten Beutel (140) Hochvakuum herrscht.

3. Geschirr (100) nach Anspruch 1 oder 2, wobei der Beutel (140) mit Phasenwechselmaterial gefüllt ist, welches nicht in Kapseln eingeschlossen ist.

4. Geschirr (100) nach einem der vorherigen Ansprüche, wobei der Beutel (140) an die erste Wand (110) des Geschirrs (100) angeklebt ist.

5. Geschirr (100) nach einem der vorherigen Ansprüche, wobei die thermisch isolierende Schicht (150) eine Luftschicht darstellt.

6. Geschirr (100) nach einem der vorherigen Ansprüche, wobei die erste (110) und die zweite Wand (120) aus keramischem Material hergestellt sind; und/oder
wobei das Geschirr (100) zumindest einen ersten Teil aus keramischem Material sowie einen zweiten Teil aus keramischem Material aufweist, wobei der erste Teil die erste Wand (110) und der zweite Teil die zweite Wand (120) umfasst, und wobei der erste Teil an dem zweiten Teil so angebracht ist, dass beide einen geschlossenen Raum begrenzen, in dem der Beutel aufgenommen ist.

7. Geschirr (100) nach dem vorherigen Anspruch, wobei der erste Teil und der zweite Teil eine der folgenden Komponenten darstellen: einen oberen Teil eines Tellers und einen unteren Teil eines Tellers; einen inneren Teil einer Tasse und einen äußeren Teil einer Tasse; einen oberen Teil eines Löffels und einen unteren Teil eines Löffels.

8. Geschirr (100) nach einem der vorherigen Ansprüche, wobei die thermisch isolierende Schicht (150) ein elastisches druckausübendes Material aufweist, das so ausgebildet ist, dass es den Beutel (140) gegen die erste Wand (110) des Geschirrs (100) drückt; und/oder wobei das elastische druckausübende Material einen Wärmeleitungskoeffizienten von weniger als 0,9 W/(m K), vorzugsweise weniger als 0,5 W/(m K) aufweist; und/oder wobei das elastische druckausübende Material einen Schaumstoff darstellt.

9. Geschirr (100) nach einem der vorherigen Ansprüche, wobei der Beutel (140) an der ersten Wand (110) des Geschirrs so angeordnet ist, dass eine Schicht des Phasenwechselmaterials in einer Richtung quer zur ersten Wand (110) des Geschirrs (100) eine Dicke zwischen 2 mm und 10 mm aufweist.

10. Geschirr (100) nach einem der vorherigen Ansprüche, wobei die erste Wand (110) des Geschirrs (100) im Wesentlichen flach ist, und wobei der Beutel (140) in einem zentralen Bereich der ersten Wand (110) angeordnet ist, so dass ein Randbereich der ersten Wand (110) frei bleibt.

11. Geschirr (100) nach einem der vorherigen Ansprüche, wobei die erste Wand (110) schalenförmig ausgebildet ist, und wobei der Beutel (140) einen schalenförmigen Teil aufweist, der so gestaltet ist, dass er an der ersten (110) schalenförmigen Wand angeordnet werden kann.

12. Geschirr (110) nach einem der vorherigen Ansprüche, wobei der Beutel (140) eine erste und eine zweite Folie aufweist, wobei das Phasenwechselmaterial zwischen der ersten und der zweiten Folie angeordnet ist, und wobei die erste Folie und die zweite Folie des Beutels eine Dicke von zumindest 40 µm, vorzugsweise zwischen 50 µm und 150 µm aufweist.

13. Geschirr (110) nach Anspruch 12, wobei die erste Folie und die zweite Folie des Beutels (140) eine Schweißschicht und eine Sperrschicht aufweisen, wobei die Schweißschicht der ersten Folie mit der Schweißschicht der zweiten Folie verschweißt ist und wobei die Schweißschicht aus Polypropylen und die Sperrschicht aus Polyamid besteht.

14. Geschirr (100) nach einem der Ansprüche 12 bis 13, wobei die erste Folie und/oder die zweite Folie eine aus Aluminium gefertigte Schicht aufweisen.

## Revendications

1. Pièce de vaisselle à double paroi (100) comprenant une première paroi (110) destinée à être chauffée, et une seconde paroi (120), dans laquelle, entre la première paroi et la seconde paroi est situé un espace (130) dans lequel une poche (140) remplie d'un matériau à changement de phase est reçue, dans laquelle la poche (140) est agencée contre la première paroi (110) de la pièce de vaisselle (100) et dans laquelle une couche thermiquement isolante (150) est formée entre la poche (140) et la seconde paroi (120) de la pièce de vaisselle (100) **caractérisée en ce que** :
le matériau à changement de phase présente une température de fusion comprise entre 40°C et 300°C et dans laquelle un vide poussé règne dans la poche remplie (140).

2. Pièce de vaisselle à double paroi (100) comprenant une première paroi (110) destinée à être refroidie et une seconde paroi (120), dans laquelle, entre la première paroi et la seconde paroi est situé un espace (130) dans lequel une poche (140) remplie d'un matériau à changement de phase est reçue, dans laquelle la poche (140) est agencée contre la première paroi (110) de la pièce de vaisselle (100) et dans laquelle une couche thermiquement isolante (150) est présente entre la poche (140) et la seconde paroi (120) de la pièce de vaisselle (100), **caractérisée en ce que** :
le matériau à changement de phase présente une température de fusion comprise entre 0°C et 14°C et dans laquelle un vide poussé règne dans la poche remplie (140).

3. Pièce de vaisselle (100) selon la revendication 1 ou 2, dans laquelle la poche (140) est remplie de matériau à changement de phase non conditionné dans des capsules.

4. Pièce de vaisselle (100) selon l'une quelconque des revendications précédentes, dans laquelle la poche (140) est collée contre la première paroi (110) de la pièce de vaisselle (100).

5. Pièce de vaisselle (100) selon l'une quelconque des revendications précédentes, dans laquelle la couche thermiquement isolante (150) est une couche d'air.

6. Pièce de vaisselle (100) selon l'une quelconque des revendications précédentes, dans laquelle les première (110) et seconde parois (120) sont réalisées à base d'un matériau céramique ; et/ou
dans laquelle la pièce de vaisselle (100) comprend au moins une première partie en un matériau céramique et une seconde partie en un matériau céramique, dans laquelle la première partie comprend la première paroi (110) et la seconde partie comprend la seconde paroi (120), et dans laquelle la première partie est fixée contre la seconde partie de telle sorte qu'elles limitent un espace fermé dans lequel la poche est reçue.

7. Pièce de vaisselle (100) selon la revendication précédente, dans laquelle la première partie et la seconde partie sont l'une quelconque des suivantes : une partie supérieure d'une assiette et une partie inférieure d'une assiette ; une partie interne d'une coupe et une partie externe d'une coupe ; une partie supérieure d'une cuillère et une partie inférieure d'une cuillère.

8. Pièce de vaisselle (100) selon l'une quelconque des revendications précédentes, dans laquelle la couche thermiquement isolante (150) comprend un matériau presseur élastique configuré de manière à presser la poche (140) contre la première paroi (110) de la pièce de vaisselle (100) ; et/ou
dans laquelle le matériau presseur élastique présente un coefficient de conduction thermique inférieur à 0,9 W/(m.K) et, de préférence, inférieur à 0,5 W/(m.K) ; et/ou
dans laquelle le matériau presseur élastique est une mousse.

9. Pièce de vaisselle (100) selon l'une quelconque des revendications précédentes, dans laquelle la poche (140) est agencée contre la première paroi (110) de la pièce de vaisselle de telle sorte qu'une couche du matériau à changement de phase présente une épaisseur, dans une direction transversale de la première paroi (110) de la pièce de vaisselle (100), comprise entre 2 mm et 10 mm.

10. Pièce de vaisselle (100) selon l'une quelconque des revendications précédentes, dans laquelle la première paroi (110) de la pièce de vaisselle (100) est sensiblement plate et dans laquelle la poche (140) est agencée contre une partie centrale de la première paroi (110) de telle sorte qu'une partie de limite de la première paroi (110) est maintenue propre.

11. Pièce de vaisselle (100) selon l'une quelconque des revendications précédentes, dans laquelle la première paroi (110) est en forme de bol et dans laquelle la poche (140) comprend une partie réalisée en forme de bol qui est configurée de manière être agencée contre la première paroi en forme de bol (110).

12. Pièce de vaisselle (110) selon l'une quelconque des revendications précédentes, dans laquelle la poche (140) comprend un premier et un second film, dans laquelle le matériau à changement de phase est situé entre les premier et second films ; et
dans laquelle les premier et second films de la poche présentent une épaisseur d'au moins 40 µm et, de préférence, une épaisseur comprise entre 50 µm et 150 µm.

13. Pièce de vaisselle (110) selon la revendication 12, dans laquelle les premier et le second films de la poche (140) comprennent une couche de soudage et une couche de barrière, dans laquelle la couche de soudage du premier film est soudée sur la couche de soudage du second film, et
dans laquelle la couche de soudage comprend du polypropylène et la couche de barrière comprend du polyamide.

14. Pièce de vaisselle (100) selon l'une quelconque des revendications 12 ou 13, dans laquelle le premier et/ou le second films comprennent une couche réalisée en aluminium.
